Europäisches Patentamt

European Patent Office

Office européen des brevets

(19)

(11) Numéro de publication: **0 100 740**
**B1**

(12) **FASCICULE DE BREVET EUROPEEN**

(45) Date de publication du fascicule du brevet:
**28.10.87**

(51) Int. Cl.⁴: **C 03 C 17/23**

(21) Numéro de dépôt: **83401599.2**

(22) Date de dépôt: **02.08.83**

(54) Amélioration de la distribution de poudre en vue de la fabrication de verre revêtu.

(30) Priorité: **02.08.82 JP 134859/82**

(43) Date de publication de la demande:
**15.02.84 Bulletin 84/7**

(45) Mention de la délivrance du brevet:
**28.10.87 Bulletin 87/44**

(84) Etats contractants désignés:
**AT BE CH DE FR GB IT LI LU NL SE**

(56) Documents cités:
**FR - A - 1 555 348**
**FR - A - 2 391 966**
**GB - A - 2 081 136**

**DERWENT, JAPANESE PATENTS REPORT, volume T,
no. 45, 12 décembre 1972**

(73) Titulaire: **SAINT-GOBAIN VITRAGE, Les
Miroirs 18, avenue d'Alsace, F-92400 Courbevoie (FR)**

(72) Inventeur: **Kawahara, Hideo, 3-205 8 Minami
Sakurasuka 2-chome, Toyonaka-shi Osaka-fu (JP)**
Inventeur: **Sakata, Nobuhiro, 6-2go 6 Komatsu
Nishimachi 2-chome, Nishinomiya-shi Hyogo-ken (JP)**
Inventeur: **Coulon, Jean-Claude, Ruelle Brintet Touches,
F-71640 Mercurey (FR)**
Inventeur: **Lovera, Patrick, 1 rue Marrou,
F-92290 Chatenay-Malabry (FR)**

(74) Mandataire: **Leconte, Jean-Gérard et al, Saint-Gobain
Recherche 39, Quai Lucien Lefranc,
F-93304 Aubervilliers Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne la fabrication de verre revêtu et elle se rapporte plus particulièrement au revêtement du verre par une couche d'oxydes métalliques obtenue par pyrolyse d'une poudre de composés organométalliques projetée sur le verre à haute température.

Lorsqu'il s'agit de revêtir du verre d'une couche d'oxydes de Fe, Cr, Co, Ti, Al, Sn, Cu, etc..., en vue de réfléchir le rayonnement calorifique solaire, de colorer, d'augmenter la dureté d'articles en verre, vaisselle, bouteilles par exemple, on utilise souvent le procédé de pulvérisation d'une solution contenant des composés organométalliques, transformables à haute température en oxydes métalliques.

Mais ce procédé présente des inconvénients, en particulier il conduit à des couches d'oxydes métalliques irrégulières, il refroidit trop fortement le verre, ce qui est particulièrement gênant pour le verre mince et ce qui peut entraîner des casses, il oblige à l'emploi de solvants qui sont nocifs, qui peuvent prendre feu et qui sont coûteux.

Pour éviter ces inconvénients, on s'oriente vers le procédé consistant à projeter sur le verre non plus un solvant contenant les composés métalliques, mais directement les composés métalliques en poudre.

Ainsi, l'emploi de composés en poudre, et en particulier d'oxyde de dibutyl étain, est prévu par le document de brevet FR-A-2 391 966, pour obtenir des articles verriers antistatiques.

Ainsi également, l'emploi de composés en poudre, et en particulier de difluorure de dibutyl étain, est prévu dans le document de brevet GB-A-2 081 136.

Pour avoir une répartition homogène de poudre sur toute la surface du verre, il est connu par le brevet EP 6064 de distribuer la poudre sur le verre à l'aide d'un dispositif comportant une fente de distribution disposée sur toute la largeur du ruban de verre défilant sous elle, ladite fente étant précédée d'une fente primaire alimentée en poudre par une pluralité de tuyaux.

Ce procédé et ce dispositif ont permis d'éviter les inconvénients liés à la pulvérisation d'une solution et d'améliorer la qualité des produits revêtus fabriqués. Toutefois, lorsqu'on cherche à augmenter la largeur de traitement, par exemple lorsqu'on veut revêtir des rubans de verre de 4 m de large, lorsqu'on veut réduire encore le débit du gaz porteur pour refroidir encore moins le verre en vue d'obtenir un rendement de pyrolyse encore plus élevé, ou lorsqu'on veut obtenir des revêtements encore plus minces et plus homogènes, on est confronté à de nouvelles difficultés. A ce moment, la poudre de composés organométalliques a tendance à adhérer aux parois des tuyauteries qui la transportent et à s'y accumuler, ce qui peut avoir pour conséquence d'altérer le débit de poudre et donc la qualité du revêtement.

En outre, on peut constater une relativement faible résistance aux agents chimiques des couches d'oxydes métalliques déposées peut-être due à la grande vitesse de défilement des substrats à revêtir sous la fente de distribution de poudre.

Certes il est connu d'ajouter à des poudres telles que du phosphate de chrome, de l'oxyde de magnésium, des épices, de la silice active hautement dispersée hydrophobe, éventuellement en mélange avec de la silice hydrophile dans des proportions pouvant atteindre 10% (FR-A-1 555 348).

Dans le procédé de revêtement du verre en vue de fournir des couches minces d'oxyde métallique il importe que les poudres projetées sur le verre, qui se décomposent puis s'oxydent, soient exemptes de certaines impuretés qui se retrouveraient dans la couche et en altèreraient l'aspect et/ou les caractéristiques physiques, en particulier optiques et électriques. Ainsi l'ajout aux composés organométalliques en poudre de silice hydrophobe en mélange avec de la silice hydrophile, dans des proportions aussi élevées que 10% tel que prévu dans le document de brevet FR-A-1 555 348, n'est pas compatible avec la fabrication de couches minces sur du verre à partir de composés en poudre, car même s'il empêche l'agglomération des poudres, il constitue une impureté ou entraîne des impuretés qui dégradent les couches obtenues à partir de ces poudres.

La présente invention vise à étendre les possibilités d'utilisation du procédé de revêtement en utilisant des poudres, tout en évitant les difficultés de fonctionnement précédemment mentionnées; elle vise également à fournir des substrats revêtus présentant de bonnes propriétés, en particulier de régularité et de résistance aux agents chimiques.

Elle propose pour cela de projeter sur le verre chaud une poudre constituée d'un mélange de la poudre de composés organométalliques et de 0,5 à 5% en poids d'un produit anhydre, hydrophobe, sous forme pulvérulente, contenant au moins 90% en poids de silice finement divisée, ledit mélange étant formé par addition de la poudre de composés organométalliques par fractions croissantes dans un récipient contenant la totalité du produit à base de silice finement divisée.

Avantageusement, le mélange contient au maximum 2% en poids du produit à base de silice.

Avantageusement encore, le produit ajouté contient plus de 98% de silice.

De préférence, on choisit comme produit à ajouter celui vendu sous le nom commercial de «AEROSIL R 972» contenant plus de 98,3% de $SiO_2$, ayant des particules d'une grosseur moyenne de 16 nm, d'une densité apparente de 50 g/l et une surface donnée suivant la mesure normalisée B.E.T de $120 \pm 30$ m$^2$/g.

Ainsi, ce produit est formé de particules dont la taille moyenne est de l'ordre de $1/1000$ de la la taille des grains de poudre à projeter sur le verre.

Conviendront également les produits à base de silice vendus sous les noms commerciaux de «CABOSIL» et de «TIXOSIL».

L'invention sera maintenant décrite plus en détail en référence aux figures jointes qui représentent:

– Figure 1: un dispositif d'essai de la capacité de la poudre à adhérer sur des surfaces;

– Figure 2: une courbe montrant la variation de cette capacité d'adhésion en fonction du pourcentage d'additif.

Des essais ont été faits avec différentes poudres, pour déterminer les pourcentages pondéraux de produits à base de silice qu'il faut ajouter auxdites poudres pour empêcher l'encrassement des dispositifs et régulariser la distribution, sans toutefois altérer les propriétés, notamment électriques, optiques et de résistance aux agents chimiques des couches déposées.

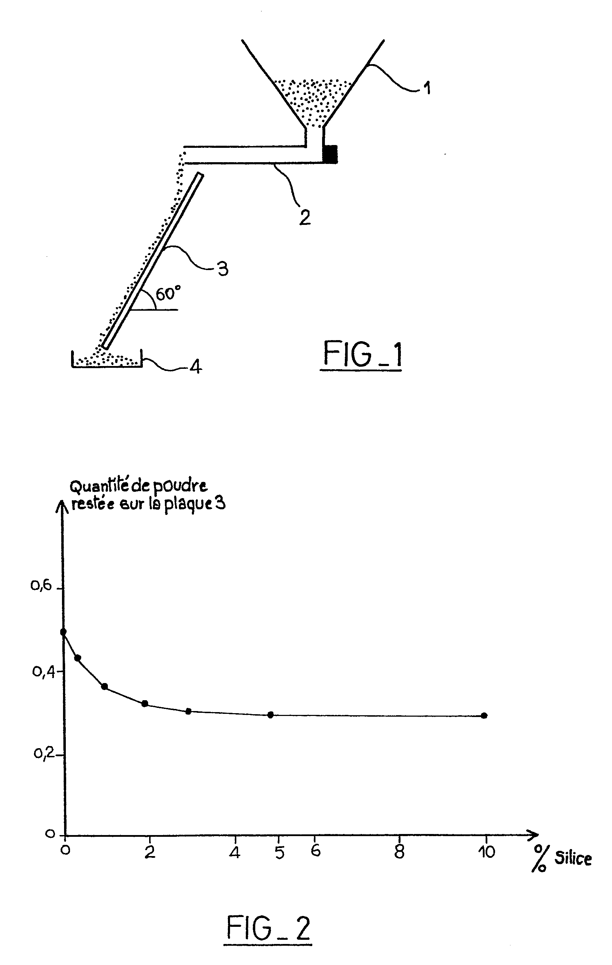

On a ainsi testé des mélanges de poudres de 70% de tri acétyl acétonate de fer et de 30% de tri acétyl acétonate de chrome, sans addition d'«Aérosil», avec 0,5–1–1,5–2–5, puis 10% en poids. Pour cela on a déshydraté le mélange pendant 24 heures à 60 °C et la teneur en eau est descendue à 0,5%. On a ensuite écrasé ce mélange dans un broyeur et on a sélectionné la poudre ayant une granulométrie de 3 à 25 microns et un diamètre moyen des grains de 7 à 8 microns. On a fait sept échantillons identiques dans lesquels on a ajouté les quantités d'«Aérosil R 972» énumérées ci-dessus, c'est à dire 0%, 0,5%, 1%, 1,5%, 2%, 5%, puis 10% en poids. Chaque échantillon a été mélangé pendant 30 minutes puis on a successivement soumis chacun des sept échantillons à un essai à l'aide du dispositif montré sur la figure 1.

Ce dispositif comporte une trémie 1 munie à son extrémité inférieure d'un système de distribution 2 par vis sans fin, une plaque 3 de fer inclinée à 60° et disposée sous la sortie de la vis sans fin, un récipient 4 de récupération de la poudre au bas de la plaque 3.

Chacun des échantillons pesant 10 grammes, successivement introduit dans la trémie 1, a été distribué sur la plaque 3 et on a pesé la poudre récupérée dans le récipient 4, la différence entre la quantité de poudre introduite dans la trémie et la quantité de poudre récupérée a fourni une indication sur la capacité de la poudre à adhérer sur la plaque 3, et donc sur son incapacité à couler. Les résultats ont été réunis sur la figure 2. Sur cette figure, on a porté en ordonnée la quantité de poudre restée fixée sur la plaque 3 et en abscisse le pourcentage «d'Aérosil». On constate un abaissement important de l'adhérence de la poudre sur la plaque 3 quand le pourcentage «d'Aérosil» croît de 0 à 2%, puis après 2% d'ajout, cette adhérence décroît encore légèrement jusqu'à un ajout de 5%, puis elle reste stable.

Ce test rend compte de la capacité de la poudre à adhérer dans des tuyauteries et donc a contrario de son incapacité à être distribuée par des installations de distribution de poudre.

Dans des fabrications réelles de substrats revêtus, les différences de comportement entre ces poudres mises en évidence par le test précédent ont pu être vérifiées.

On a ensuite utilisé des échantillons de la même poudre de tri-acétyl acétonate de fer et de tri-acétyl acétonate de chrome, additionnés respectivement de 0%, 0,5%, 1%, et 2% «d'Aérosil» pour effectuer des essais de résistance aux agents chimiques des revêtements obtenus à partir de ces divers échantillons.

A l'aide d'un pistolet, on a projeté successivement la poudre des 4 échantillons précités sur la surface de plaques de verre de 5 mm d'épaisseur, de dimensions 150 mm × 150 mm, portées à une température de 575 à 580 °C. La pression de l'air d'entraînement de la poudre dans le pistolet était de 4,5 kg/cm$^2$ et le débit de 80 l/min. Dans tous les cas la projection a duré 2 secondes. On a ainsi obtenu des verres régulièrement revêtus d'une couche d'oxydes de Fe et de Cr. On a découpé ces échantillons en éprouvettes de 50 mm × 25 mm et on a plongé ces éprouvettes dans des bains à 20 °C d'acide chlorhydrique (HCl) et de Soude (NaOH) de normalité 1. On a observé le nombre de jours au bout duquel un défaut du type trou d'épingle, décoloration, décollement s'est produit sur les revêtements.

Les résultats sont proposés sur le tableau 1 disposé en fin de description.

On a pu constater une résistance d'autant plus élevée que le pourcentage «d'Aérosil» est plus élevé.

Ont aussi été testés des mélanges de poudres de 50% de tri acétyl acétonate de fer et de 50% de tri acétyl acétonate de chrome, dans un premier temps sans addition de silice finement divisée, dans un deuxième temps avec addition de 1% de silice, puis dans un troisième temps avec addition d'un pourcentage de silice supérieur à 5%.

Il apparaît que la distribution du mélange de poudre est beaucoup améliorée lorsque 1% de silice finement divisée a été ajouté; le débit de la poudre est augmenté et la régularité de la distribution est améliorée.

Par contre on constate que pour des adjonctions d'un pourcentage supérieur à 5%, il n'y a pas d'amélioration supplémentaire sur le plan de la distribution, mais que les propriétés des revêtements obtenus sur le verre, notamment propriétés optiques ou électriques, sont altérées.

Les mêmes constatations ont été faites avec des poudres de difluorure de dibutyl étain, d'oxyde de dibutyl étain, d'acétyl acétonates de divers métaux (Fe, Cr, Co, Ti, Al, Sn, Cu, In) de mélanges d'acétyl acétonates de divers métaux (par exemple Fe, Cr, CoII) et diverses autres poudres de composés métalliques à base de Fe, Cr, In, Co, Ti, Al, Sn, Cu ou de mélanges de ces poudres.

En définitive, on constate que l'amélioration apportée par l'adjonction de silice finement divisée est faible lorsque la quantité ajoutée est de 0,5%, elle est maximale pour les doses de 1 à 2% et en particulier 2%, et les pourcentages supérieurs à 5% se traduisent par une altération des propriétés du revêtement.

L'addition de silice finement divisée, anhydre, hydrophobe, permet donc d'améliorer la distribution de la poudre. Elle favorise l'emploi de fentes de distribution de grande longueur tout en préservant la régularité et l'homogénéité de la distribution.

L'homogénéité et la régularité de la distribution pouvant être améliorées, il en résulte une plus grande facilité dans la réalisation de revêtements sur du verre, notamment de revêtements à propriétés électriques, et parmi ces revêtements, de revêtements antistatiques. On sait que la difficulté est d'obtenir une continuité du revêtement, sans surépaisseurs localisées qui entraînent une consommation de poudre, et altèrent les propriétés optiques, en particulier réduisent la transmission. Du fait de la meilleure homogénéité et régularité de la distribution, il est possible d'obtenir des couches de revêtement plus régulières, d'épaisseur plus uniforme, et cela est particulièrement important dans le cas de couches anti-statiques où l'on cherche une continuité du revêtement; en même temps qu'une épaisseur faible pour atteindre des résistances électriques de l'ordre de 100 000 ohms par carré.

L'homogénéité et la régularité de la distribution se traduit aussi par un plus bel aspect des revêtements, sans mouchetis et n'entraînant pas de phénomènes d'irisation.

On constate également que la résistance à l'abrasion des revêtements est plus homogène, et que la résistance aux agents chimiques est renforcée.

On sait également qu'il est très important de contrôler la granulométrie des poudres projetées, pour éviter leur toxicité vis-à-vis des techniciens fabriquant les vitrages revêtus. Grâce à l'adjonction de silice finement divisée et hydrophobe, on évite la réagglomération des poudres, et on obtient une granulométrie constante, qu'on choisit pour éviter toute toxicité.

La distribution de poudre étant améliorée, il est possible de diminuer le débit de gaz porteur pour réduire le refroidissement du verre occasionné par la projection de poudre en suspension dans ledit gaz porteur, ceci présente en particulier un intérêt lorsqu'il s'agit d'obtenir des verres revêtus trempés. On sait que la difficulté est d'obtenir la pyrolyse de la poudre de composés organométalliques projetée sur le verre, avec un rendement de pyrolyse satisfaisant sans jamais porter le verre à une température supérieure à environ 520° pour ne pas faire disparaître les contraintes de compression superficielles du verre, résultant de la trempe. Le verre étant donc initialement relativement froid, on cherche à abaisser sa température par la pulvérisation le moins possible. L'emploi de poudres notamment de dibutyl oxyde d'étain décrit dans la publication de brevet français 2 391 966 a déjà constitué un progrès par rapport à l'emploi de composés métalliques en solution. La possibilité de réduction du débit du gaz porteur véhiculant la poudre, grâce à l'adjonction de silice hydrophobe, finement divisée, constitue un progrès supplémentaire et permet de refroidir encore moins le verre et d'améliorer le rendement de pyrolyse.

Ces additifs introduits dans les poudres ont donc un effet favorable lorsque les proportions sont comprises entre 0,5 et 5% et de préférence entre 1 et 2%. Dans des proportions plus importantes, on constate un effet défavorable quant à la régularité et à l'homogénéité de la distribution des poudres, mais également une pollution des revêtements, les propriétés optiques en particulier étant perturbées.

Pour permettre un bon enrobage des grains de poudres par les particules de silice hydrophobe finement divisée, on additionne par petites fractions croissantes la poudre dans un récepteur ou mélangeur contenant la totalité de la silice divisée à incorporer.

Tableau 1

| N° d'échantillon | Taux (%) d'Aérosil (SiO$_2$) dans la poudre à projeter | Nombre de jours d'endurance | |
|---|---|---|---|
| | | résistance à l'acide | résistance à la soude |
| 1 | 0 % | 8 heures | 9 jours |
| 2 | 0 % | 8 heures | 9 jours |
| 3 | 0 % | 8 heures | 12 jours |
| 4 | 0,5% | 1 jour | 14 jours |
| 5 | 0,5% | 1 jour | 12 jours |
| 6 | 0,5% | 3 jours | 19 jours |
| 4 | 1 % | 3 jours | 27 jours |
| 5 | 1 % | 2 jours | 17 jours |
| 6 | 2 % | 5 jours | 29 jours |
| 7 | 2 % | 11 jours | 19 jours |
| 8 | 2 % | 9 jours | 17 jours |

## Revendications

1. Procédé de formation d'une couche d'oxydes métalliques sur du verre par pyrolyse d'une poudre de composés organométalliques, projetée sur le verre chaud, caractérisé en ce que la poudre à projeter sur le verre est un mélange de la poudre de composés organométalliques et de 0,5 à 5% en poids d'un produit anhydre, hydrophobe, sous forme pulvérulente, contenant au moins 90% en poids de silice finement divisée, et en ce que pour former ledit mélange, on additionne la poudre de composés organométalliques par fractions croissantes dans un récipient contenant la totalité du produit à base de silice finement divisée.

2. Procédé selon la revendication 1, caractérisé en ce que les proportions de produit à base de silice hydrophobe par rapport au poids de poudre sont au maximum de 2%.

3. Procédé selon l'une des revendications 1 ou 2, caractérisé en ce que le produit à base de silice hydrophobe contient plus de 98% de silice.

4. Procédé selon l'une des revendications 1 à 3, caractérisé en ce que les poudres de composés organométalliques sont à base d'oxyde de dibutyl étain, de difluorure de dibutyl étain, d'acétyl acétonate de Fe, Co, Cr, Ti, Al, Sn, Cu, In, d'un mélange de ces acétyl acétonates, à base d'indium.

5. Procédé selon l'une des revendications précédentes, caractérisé en ce que le produit à base de silice employé est celui ayant la dénomination «AEROSIL».

6. Procédé selon l'une des revendications précédentes, caractérisé en ce que la granulométrie moyenne du produit à base de silice est d'environ 15 nanomètres.

## Claims

1. A method of forming a layer of metallic oxides on glass by pyrolysis of a powder of organometallic compounds projected on to the hot glass, characterised in that the powder to be projected on to the glass is a mixture of a powder of organometallic compounds and from 0.5 to 5% by weight of a hydrophobic, anhydrous product in powder form containing at least 90% by weight of finely divided silica, and in that to form said mixture the powder of organometallic compounds is added in increasing fractions to a receptacle containing all the finely divided silica-based products.

2. A method according to claim 1, characterised in that the ratio of the amount of hydrophobic silica-based product to the amount of powder, by weight, is up to 2%.

3. A method according to claim 1 or 2, characterised in that the hydrophobic silica-based product contains at least 98% of silica.

4. A method according to one of claims 1 to 3, characterised in that the powders of organometallic compounds are based on: dibutyltin oxide,- dibutyltin difluoride,- Fe, Co, Cr, Ti, Al, Sn, Cu or In acetyl acetonate,- a mixture of acetyl acetonates,- or indium.

5. A method according to any one of the preceding claims, characterised in that the silica-based product used is that known as «AEROSIL».

6. A method according to any one of the preceding claims, characterised in that the average grain size of the silica-based product is about 15 nanometres.

## Patentansprüche

1. Verfahren zur Herstellung einer Schicht von Metalloxiden auf Glas durch Pyrolyse eines Pulvers organometallischer Zusammensetzung, das auf das heisse Glas aufgetragen wird, dadurch gekennzeichnet, dass das auf das Glas aufzutragende Pulver eine Mischung aus dem Pulver organometallischer Zusammensetzung und aus 0,5 bis 5 Gew.-% eines wasserfreien hydrophoben Produktes in Pulverform ist, das wenigstens 90 Gew.-% fein verteiltes Siliciumoxid enthält, und dass zur Bildung dieser Mischung das Pulver organometallischer Zusammensetzung in zunehmenden Anteilen in ein Gefäss zugegeben wird, das die Gesamtmenge des Produktes auf der Basis von feinverteiltem Siliciumoxid enthält.

2. Verfahren nach Anspruch 1, dadurch gekennzeichnet, dass die Anteile des Produktes auf der Basis von hydrophobem Siliciumoxid im Verhältnis zum Pulvergewicht maximal 2% ausmachen.

3. Verfahren nach einem der Ansprüche 1 oder 2, dadurch gekennzeichnet, dass das Produkt auf der Basis von hydrophobem Siliciumoxid mehr als 98% Siliciumoxid enthält.

4. Verfahren nach einem der Ansprüche 1 bis 3, dadurch gekennzeichnet, dass die Pulver organometallischer Zusammensetzung auf der Basis von Dibutylzinnoxid, Dibutylzinndifluorid, Acetylacetonat von Fe, Co, Cr, Ti, Al, Sn, Cu, In, einer Mischung dieser Acetylacetonate auf der Basis von Indium vorliegen.

5. Verfahren nach einem der vorhergehenden Ansprüche, dadurch gekennzeichnet, dass das verwendete Produkt auf der Basis von Siliciumoxid dasjenige ist, das unter der Bezeichnung «AEROSIL» im Handel erhältlich ist.

6. Verfahren nach einem der vorhergehenden Ansprüche, dadurch gekennzeichnet, dass die mittlere Korngrösse des Produktes auf der Basis von Siliciumoxid ca. 15 nm beträgt.

0 100 740

FIG_1

FIG_2

7